# EUROPEAN PATENT APPLICATION

(11) **EP 4 790 266 A1**
(43) Date of publication of application: **12.08.2026**
(21) Application number: 25156738.4
(22) Date of filing: 10.02.2025
(51) Int. Cl.: F16B 25/00, F16B 33/00, F16B 43/00

(54) **FASTENER, A FASTENING SYSTEM AND A METHOD FOR FASTENING**

(71) Applicant: Hilti Aktiengesellschaft, 9494 Schaan (LI)
(72) Inventor: Kong, Xiaoxi, 9494 Schaan (LI); Schöffendt, Erwin, 86916 Kaufering (DE); Neuss, Horst, 9472 Grabs (CH); Beauvais, Simon, 6912 Hörbranz (AT); Waldner, Astrid, 7320 Sargans (CH); Wettstein, Andreas, 6800 Feldkirch (AT)
(74) Representative: Hilti Aktiengesellschaft Corporate Intellectual Property

(57) **Abstract**

A fastener (591) for fastening a first component to a base component, wherein the fastener comprising a bottom part (10), a head part (30) and a fastening direction (20),
- wherein the bottom part comprising
- a bottom thread for interacting with the base component,
- a bottom sealing element (14) for sealing an area between the fastener and the base component

- wherein the head part comprising
- a first section, wherein the first section is configured to receive and to transfer a tensile load and/or a shear load, wherein the tensile load acts along the fastening direction and the shear load acts perpendicular to the fastening direction,
- a top sealing element (36), wherein the top sealing element comprising at least one contact surface for contacting the top sealing element to the first component,
- a top section, wherein the top section comprising an interface for driving the fastener through the first component into the base component,

- wherein the top sealing element is configured to receive and to transfer the tensile load and/or the shear load.

## Description

The present invention relates to a fastener for fastening a first component to a base component. Further the invention relates to a system comprising a fastener, a first component and a base component for fastening a first component to a base component. Further the invention relates to a method for fastening a first component to a base component.

### Background prior-art

US 2015063944 AA teaches a fastener that combines the functions of a screw and a washer into one piece, simplifying assembly and reducing the number of parts needed. By using a Belleville-shaped head, this fastener creates a clamping force when installed, ensuring a connection between materials. The disadvantage of this fastener is, that it creates a safety hazard as its head is protruding out of the fastened material, and the sealing function, especially regarding water, is not guaranteed.

EP 0527999 A1 discloses a screw with a groove that collects material as it cuts into the blind hole, making the installation process cleaner and more efficient. The self-tapping thread allows the screw to create its own thread in the material, ensuring a secure fit without the operation of cutting a thread. By incorporating a thread that extends into the groove, the screw enhances its grip and stability, reducing the risk of loosening over time. The disadvantage of this screw is, that it creates a safety hazard as its head is protruding out of the fastened material, and the sealing function, especially regarding water, is not guaranteed.

An objective of the present invention is to overcome the disadvantages of the prior art and to provide a fastener, a fastening system and a method for fastening which provides a high corrosion protection combined with a high fastening load, an enhanced safety for the user and a wide range of application, including a fast and easy fastening process due to the configuration of the fastener.

### Description of the invention

A first aspect of the invention comprises a fastener for fastening a first component to a base component, wherein the fastener comprising a bottom part, a head part and a fastening direction,
- wherein the bottom part comprising
   - a bottom thread for interacting with the base component,
   - a bottom sealing element for sealing an area between the fastener and the base component,
- wherein the head part comprising
   - a first section, wherein the first section is configured to receive and to transfer a tensile load and/or a shear load, wherein the tensile load acts along the fastening direction and the shear load acts perpendicular to the fastening direction,
   - a top sealing element, wherein the top sealing element comprising at least one contact surface for contacting the top sealing element to the first component,
   - a top section, wherein the top section comprising an interface for driving the fastener through the first component into the base component,
- wherein the top sealing element is configured to receive and to transfer a tensile load and/or a shear load.

The term "first component" comprises a component which is suitable to be fastened on a heavier component. Preferably the first component is a metal component and particularly preferably, the first component is a checker plate

The term "base component" comprises a component which is suitable to attach a first component on it. Preferably the base component is a metal component and particularly preferably, the base component is a steel beam.

The term "fastening direction" describes the direction in which the fastener is fastened. For example, if the fastener fastens a first component to a base component which is on the ground, then the fastening direction is towards the ground.

The term "bottom thread" refers to an element comprising a shaft and a thread part. The thread part is a self-tapping thread which is configured to create a thread in a base material and to fasten to the base material.

The term "bottom sealing element" is configured to seal a certain area, preferably a blind hole in a base component. The bottom sealing element is further configured to avoid corrosion and to avoid a drop in load performance of the fastener. The bottom sealing element can be a standard sealing element and/or a spring.

The term "first section" describes a section at the head part of the fastener, which is configured to receive and to transfer a tensile load and/or a shear load, wherein the tensile load acts along the fastening direction and the shear load acts perpendicular to the fastening direction. In other words, if a fastener is configured or suitable to fasten a checker plate on a steel beam, then the first section ensures that a tensile load and/or a shear load can be absorbed by the fastener. The fastener, preferred the head part of the fastener, can comprise a second, a third or any other number of further sections. Further, the top sealing element can be placed at or around or above or under the first section.

The term "top sealing element" comprises an element which is configured to seal a defined area, preferably between the fastener and the first component and is configured to receive and to transfer the tensile load and/or the shear load. In other words: The top sealing element is not only able seal but is also able to absorb tensile load and/or a shear load without losing the ability to seal. Further, the top sealing element is able to absorb high loads without breaking. Further, the top sealing is configured to absorb high temperature changes without losing performance. Further the top sealing element can be a spring.

The term "top section" defines a section, which comprises an interface for a tool to drive fastener through the first component into the base component. Further, the top section provides a flat head of the fastener. Hence, the top section avoids the fastener of being a tripping hazard and enhances the safety of the user. Further, the top section is configured to receive and to transfer a tensile load and/or a shear load or no load. Further the top section comprises a flat top section configured to avoid the fastener of protruding and impacting the safety of the user, particularly preferably configured to avoid the fastener of being a tripping hazard.

At least one technical effect of the aspect is that the fastener provides a high corrosion protection combined with a high fastening load, an enhanced safety for the user and a wide range of application, including a fast and easy fastening process due to the configuration of the fastener.

In a further embodiment, the invention comprising a fastener, wherein the first section is a first cylindrical section or a first converging section, wherein the first converging section converges in the fastening direction.

The term "first cylindrical section" describes that the shape or the outer surface of the first section is cylindrical. In other words: The outer surface of the first section is parallel to the longitudinal axis of the fastener. This leads in this alternative to a first section comprises a round shape of a cross-section (perpendicular to the longitudinal axis of the fastener) and a constant diameter of said cross-section. The fastener, preferred the head part of the fastener, can comprise a second, a third or any other number of cylindrical sections.

The term "first converging section" describes that the shape or the outer surface of the first section is non-cylindrical. The outer surface of the first section is not parallel to the longitudinal axis of the fastener. This leads in this alternative to a first section comprises a cross-section (perpendicular to the fastening direction of the fastener), wherein the size of the cross-section shrinks in the fastening direction. The fastener, preferred the head part of the fastener, can comprise a second, a third or any other number of converging sections.

In a further embodiment, the invention comprising a fastener, wherein the first converging section is a first conical section.

The term "first conical section" describes that the shape or the outer surface of the first section is conical. In other words: The outer surface of the first section is not parallel to the longitudinal axis of the fastener. This leads in this alternative to a first section comprises a round shape of a cross-section (perpendicular to the longitudinal axis of the fastener) and a varying diameter of said cross-section. The fastener, preferred the head part of the fastener, can comprise a second, a third or any other number of conical sections.

In a further embodiment, the invention comprising a fastener, wherein the fastener further comprising a second section.

The term "second section" describes a section at the head part of the fastener, which is configured to receive and to transfer a tensile load and/or a shear load, wherein the tensile load acts along the fastening direction and the shear load acts perpendicular to the fastening direction. In other words, if a fastener is configured or suitable to fasten a checker plate on a steel beam, then the second section ensures that a tensile load and/or a shear load can be absorbed by the fastener. The fastener, preferred the head part of the fastener, can comprise a third or any other number of further sections. Further, the top sealing element can be placed at or around or above or under the second section.

In a further embodiment, the invention comprising a fastener, wherein the second section is a second cylindrical section or a second converging section wherein the second converging section converges in the fastening direction.

The term "second cylindrical section" describes that the shape or the outer surface of the second section is cylindrical. In other words: The outer surface of the second section is parallel to the longitudinal axis of the fastener. This leads in this alternative to a second section comprises a round shape of a cross-section (perpendicular to the longitudinal axis of the fastener) and a constant diameter of said cross-section. The fastener, preferred the head part of the fastener, can comprise a second, a third or any other number of cylindrical sections.

The term "second converging section" describes that the shape or the outer surface of the second section is non-cylindrical. The outer surface of the second section is not parallel to the longitudinal axis of the fastener. This leads in this alternative to a second section comprises a round shape of a cross-section (perpendicular to the longitudinal axis of the fastener) or a non-round shape of said cross-section. The fastener, preferred the head part of the fastener, can comprise a second, a third or any other number of converging sections.

At least one technical effect of the before mentioned embodiments is that a very high fastening load with a noticeable enhanced safety for the user and a very wide range of application including a fast and easy fastening process due to the configuration of the fastener and a very high corrosion protection, is ensured.

In a further embodiment, the invention comprising a fastener, wherein the top sealing element comprising a top sealing position, wherein the top sealing position is at least one of the following:
- around the first section,
- around the second section,
- above the first section,
- above the second section,
- under the top section,
- on the top section.

The term "around" describes that the at least one contact surface of the top sealing element is in direct contact with the first section and/or the second section.

The term "above" describes that the at least one contact surface of the top sealing element is in direct contact from top to bottom with the first section and/or the second section.

The term "under" describes that the at least one contact surface of the top sealing element is in direct contact from bottom to top with the first section and/or the second section.

The term "on" describes that the at least one contact surface of the top sealing element is in direct contact from an arbitrary direction with the first section and/or the second section.

In all mentioned alternative the top sealing element can comprise more than one contact surface and different single or combined sealing positions.

At least one technical effect of this further embodiment is that a very high fastening load with a noticeable enhanced safety for the user and a very high corrosion protection for the connection of the fastener to the first component is ensured.

In a further embodiment, the invention comprising a fastener, wherein the head part comprising a head base surface configured to apply a compression force to the bottom sealing element to ensure a sealing of the bottom sealing element in an axial and/or a radial direction.

The term "head base surface" describes the bottom surface of the head part, which defines the transition from the head part to the bottom part of the fastener and is preferably perpendicular to the longitudinal axis of the fastener. In a further embodiment the head base surface can be not perpendicular to the longitudinal axis of the fastener, preferably the head base surface can be conical.

At least one technical effect of this further embodiment is that a very high corrosion protection for the connection of the fastener the base component is ensured.

In a further embodiment, the invention comprising a fastener, wherein the first converging section comprising an at least one first converging angle, wherein the at least one first converging angle is configured such, that the first converging section is able to receive and to transfer the tensile load and/or the shear load.

The term "at least one converging angle" describes an angle between an axis which is perpendicular to the longitudinal axis of the fastener and the converging angle. The converging section can comprise more than one first converging angle, preferably the converging section comprises exactly one first converging angle.

At least one technical effect of this further embodiment is that a tensile load and/or a shear load can be transferred between the fastener and the first component. This leads to a very high fastening load with a noticeable enhanced safety for the user and a very high corrosion protection is ensured.

In a further embodiment, the invention comprising a fastener, wherein the at least one first converging angle comprising a value of 30° and/or 45° and/or 60° and/or at least one value out of one of the following angle ranges:
- 15° to 75°,
- 20° to 40°,
- 25° to 35°,
- 35° to 55°,
- 40° to 50°,
- 42° to 48°,
- 44° to 46°,
- 50° to 70°.

At least one technical effect of this further embodiment is that a very well-balanced distribution between load capability and manufacturing of the fastener is ensured. This leads to very high fastening load with a noticeable enhanced safety for the user and a very high corrosion protection is ensured.

In a further embodiment, the invention comprising a fastener, wherein the contact surface of the top sealing element comprising a sealing width, wherein the sealing width comprising a value of 3 mm or a value out of one of the following ranges:
- 1.0 mm to 5.0 mm,
- 1.2 mm to 4.8 mm,
- 1.4 mm to 4.6 mm,
- 1.6 mm to 4.4 mm,
- 1.8 mm to 4.2 mm,
- 2.0 mm to 4.0 mm,
- 2.2 mm to 3.8 mm,
- 2.4 mm to 3.6 mm,
- 2.6 mm to 3.4 mm,
- 2.8 mm to 3.2 mm,
- 2.5 mm to 3.5 mm,
- 2.6 mm to 3.4 mm,
- 2.7 mm to 3.3 mm,
- 2.8 mm to 3.2 mm,
- 2.9 mm to 3.1 mm.

The term "sealing width" describes the length of the contact surface which is configured to contact a first component or is in contact with a first component. The sealing width can be a circle length of a round shaped top sealing element or a diameter or a length a flat shaped top sealing element.

At least one technical effect of this further embodiment is that a very high corrosion protection is ensured.

In a further embodiment, the invention comprising a fastener, wherein the top sealing element comprising a compression rate, wherein the compression rate comprising a value of 30% or a value out of one of the following ranges:
- 5% to 60%,
- 5% to 50%,
- 5% to 45%,
- 5% to 40%,
- 5% to 35%,
- 5% to 30%,
- 5% to 25%,
- 5% to 20%,
- 5% to 15%,
- 5% to 15%,
- 10% to 30%.

At least one technical effect of this further embodiment is that the fastener provides a high corrosion protection combined with a high fastening load, an enhanced safety for the user and a wide range of application, a high corrosion protection including a fast and easy fastening process due to the configuration of the fastener.

A second aspect of the invention comprises a fastening system comprising a fastener according to one of the embodiments and a first component and a base component, wherein the fastener fastens the first component to the base component.

At least one technical effect of this second aspect is that.

The definitions of the second aspect are identical to the definitions of the first aspect. At least one technical effect of this further aspect is that the fastening system provides a high corrosion protection combined with a high fastening load, an enhanced safety for the user and a wide range of application, a high corrosion protection including a fast and easy fastening process due to the configuration of the fastening system.

In a further embodiment, the invention comprising a fastening system, wherein the first component comprising a first thickness, wherein the fastener comprising a converging section a with converging height along the fastening direction, wherein the converging height of the fastener is less or equal to the first thickness of the first component.

At least one technical effect of this further embodiment is that the converging section of the fastener fits such with the first component that a tensile or a shear load can be transferred between the converging section and the first component.

A third aspect of the invention comprises a method for fastening a first component to a base component, comprising at least the steps of:
- placing the first component on top of the base component,
- drilling with one step the first component and the base component,
- fastening a fastener into to the first component and the base component.

The definitions of the first aspect and the second aspect are identical to the definitions of the third aspect.

The term "drilling with one step" comprising only one step for drilling the first component and the within the same drilling step the base component. It is important to note, that the first component is always drilled through the complete first thickness of the first component. Whereas the base component can be drilled through the complete thickness of the base component or partly through the thickness of the base component. The latter results in a blind hole in the base component.

It is important to note that this method preferably comprises the fastener of one of the embodiments within this invention.

At least one technical effect of this third aspect is that the method provides a high corrosion protection combined with a high fastening load, an enhanced safety for the user and a wide range of application, a high corrosion protection including a very fast and easy fastening process.

In a further embodiment, the invention comprising a method, wherein the method comprising at least a further step of:
- fixating the first component to the base component during the drilling of the first component and the base component.

The term "fixating" defines that the first component and the base component are not able to change their position in respective to each other, as long the drilling step is not finished.

At least one technical effect of this further embodiment is that the method provides a high corrosion protection combined with a high fastening load, an enhanced safety for the user and a wide range of application, a high corrosion protection including a very fast and easy fastening process.

The invention has been described with reference to a fastener The features of the embodiments described can also be combined with one another embodiment as desired within a fastener or a fastening system or a fastening method. It should be noted that the method according to the invention method is also suitable for other purposes.

Further optional embodiments follow which can be combined or specified as desired with all previous embodiments of the first, second and third aspects and with all further optional embodiments of the first, second and third aspects.

In a further optional embodiment, the invention comprising a fastener, wherein the bottom sealing element and the top sealing element is the same element.

At least one technical effect of this optional embodiment is to fasten the first component to the base component and seal the base component via the fastener.

In a further optional embodiment, the invention comprising a fastener wherein the head base surface comprising a head base surface diameter, wherein the head base surface diameter comprising a value of 10 mm or 10.5 mm or 12 mm or a value out of one of the following diameter ranges:
- 9 mm to 13 mm,
- 9 mm to 11 mm,
- 10 mm to 14 mm,
- 11 mm to 13 mm,
- 14 mm to 18 mm,
- 18 mm to 26 mm.

At least one technical effect of this optional embodiment is that the corrosion protection is enhanced.

In a further optional embodiment, the invention comprising a fastener, wherein the bottom thread is connected to the head part and configured to generate a compression force to the first component through the head part.

At least one technical effect of this optional embodiment is to fasten the first component to the base component and seal the base component via the fastener.

In a further optional embodiment, the invention comprising a fastener, wherein the bottom thread is connected to the head part and configured to generate a tension to the head part.

At least one technical effect of this optional embodiment is to fasten the first component to the base component and seal the base component via the fastener.

In a further optional embodiment, the invention comprising a fastener, wherein the top sealing element is an O-ring or a metal gasket or a sealing coating.

At least one technical effect of this optional embodiment is a very high fastening load with a noticeable enhanced safety for the user and a very wide range of application including a fast and easy fastening process due to the configuration of the fastener and a very high corrosion protection, is ensured.

In a further optional embodiment, the invention comprising a fastener, wherein the converging section comprising a converging height along the fastening direction, wherein the converging height comprising a value of 6.35 mm or a value out of one of the following ranges:
- 5 mm to 8 mm,
- 6 mm to 7 mm,
- 6 mm to 10 mm,
- 7 mm to 9 mm,
- 8 mm to 12 mm,
- 9 mm to 11 mm,
- 10 mm to 14 mm,
- 11 mm to 13 mm.

At least one technical effect of this optional embodiment is that a well distributed fastening force is realized.

In a further optional embodiment, the invention comprising a fastener, wherein the bottom sealing element comprising a bottom sealing element diameter, wherein the bottom sealing diameter is less or equal to the head base surface diameter.

The term "bottom sealing element diameter" describes the diameter of the bottom sealing element which is configured to contact the head base surface and/or the first base component.

At least one technical effect of this optional embodiment is that the corrosion protection is enhanced.

In a further optional embodiment, the invention comprises a fastener, wherein the bottom thread is configured to transfer the tensile load and/or the shear load.

At least one technical effect of this optional embodiment is to fasten the first component to the base component and seal the base component via the fastener.

In a further optional embodiment, the invention comprises a fastener, wherein the bottom thread is configured to form a thread.

At least one technical effect of this optional embodiment is that the fastener is able to form a thread and to fasten the first component to the base component and seal the base component.

In a further optional embodiment, the invention comprises a fastener, wherein the bottom sealing element is configured to seal an opening of the base component, preferably a blind hole, to avoid corrosion in the opening.

At least one technical effect of this optional embodiment is that the corrosion protection is enhanced.

In a further optional embodiment, the invention comprises a fastener, wherein the bottom thread comprising an embedment depth, wherein the embedment depth comprising a value of 3.5 mm or 5.0 mm or a value out of one of the following ranges:
- 3.5 mm to 4.9 mm,
- 3.7 mm to 4.7 mm,
- 3.9 mm to 4.5 mm,
- 4.0 mm to 4.3 mm,
- 4.1 mm to 4.2 mm,
- 6.0 mm to 7.0 mm,
- 6.0 mm to 7.5 mm,
- 6.0 mm to 7.9 mm.

At least one technical effect of this optional embodiment is that the fastener is able to form a thread and to fasten the first component to the base component and seal the base component.

In a further optional embodiment, the invention comprises a fastener, wherein the interface is a hexagonal interface or a torx interface.

At least one technical effect of this optional embodiment is that the fastener is configured for being fastened.

In a further optional embodiment, the invention comprises a fastening system, wherein the base component comprising a second thickness and a hole, wherein the depth of the hole is less than the second thickness.

At least one technical effect of this optional embodiment is that the corrosion protection is enhanced.

In a further optional embodiment, the invention comprises a fastening system, wherein the first component comprising a tapered hole, wherein the tapered hole comprising an angle which fits to the at least one first converging angle of the fastener.

At least one technical effect of this optional embodiment is that a well distributed fastening force is realized.

In a further optional embodiment, the invention comprises a method, wherein the method comprising at least a further step of:
- realizing the drilling step and the fastening step with only one working device.

At least one technical effect of this optional embodiment is that the fastening method is enhanced and accelerated.

In a further optional embodiment, the invention comprises a method, wherein the method comprising at least a further step of:
- changing a bit of the working device only once between the drilling step and the fastening step.

At least one technical effect of this optional embodiment is that the fastening method is enhanced and accelerated.

### Examples of embodiments

The invention is explained in more detail below with reference to the drawings with reference to examples of embodiments.
Figure 1 shows a first embodiment of a fastener in a side view.
Figure 2 shows a first embodiment of a fastener in a cross-sectional view.
Figure 3 shows a first embodiment of a system comprising a fastener, a first component and a base component in a three-dimensional view.
Figure 4 shows a first embodiment of a system comprising a fastener, a first component and a base component in a cross-sectional view.
Figure 5 shows a first embodiment of a method for fastening a first component to a base component.

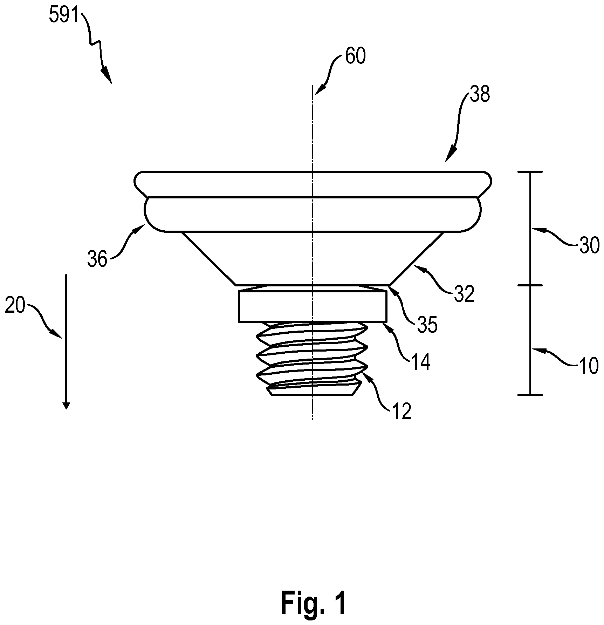

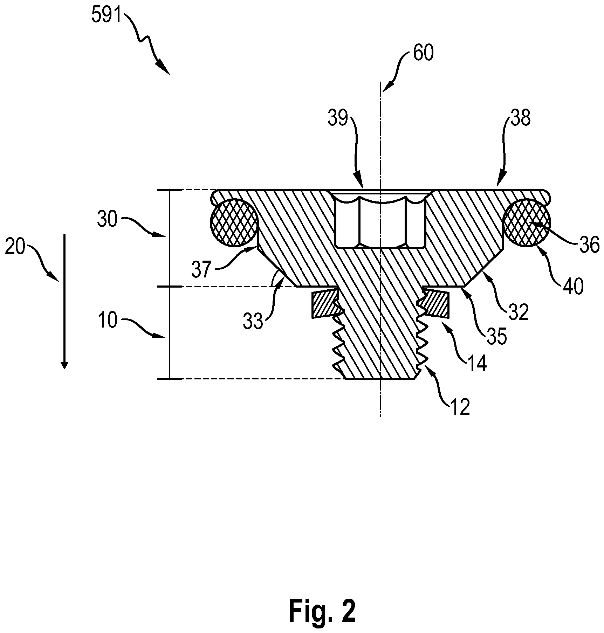

**Figure 1** **and** **Figure 2** show a first embodiment of a fastener 591 in a side view (figure 1) and in a cross-sectional view (figure 2). The fastener 591 comprising a head part 30 a bottom part 10 and is configured to be driven in the fastening direction 20. The fastener 591 is described in the following from the head part 30 to the bottom part 10.

The head part 30 comprising a top section 38 with an interface 39 configured to drive the fastener 591 in a first component and in a base component. In this embodiment the interface 39 is a hexagonal interface. Under the top section 38 follows an optional second section 37. The optional second section 37 is a cylindrical section within this embodiment. A top sealing element 36, an O-ring within this embodiment, is placed around the optional second section 37. The top sealing element 36 comprises a contact surface 40 for contacting the top sealing element to a first component.

Under the optional second section 37 follows a converging section 32. The converging section 32 is a conical section within this embodiment. It is important to note that the converging direction of the converging section 32 is towards the setting direction 20 and along the longitudinal axis 60 of the fastener 591. The converging section 32 comprises exactly one converging angle 33 with a value of 45°. The head part 30 further comprising a head base surface 35.

The bottom part 10 comprising a bottom thread 12 adjacent to the head base surface 35 and a bottom sealing 14, which is positioned around the bottom thread 12 and under the converging section 32.

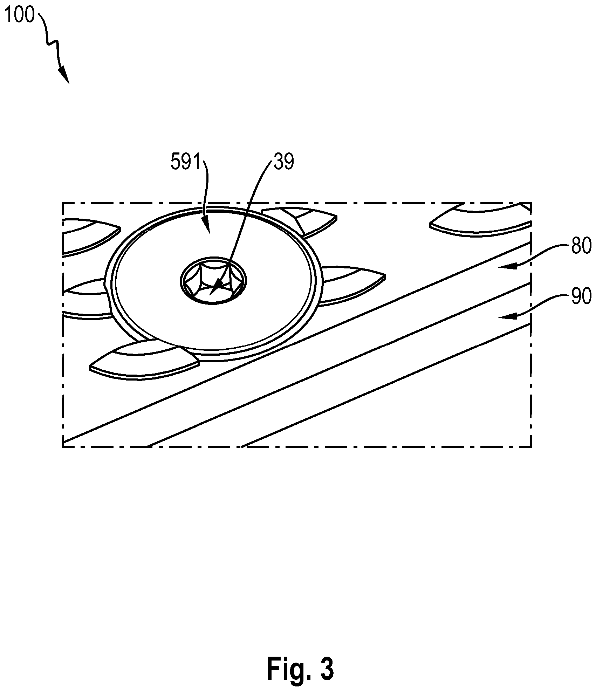

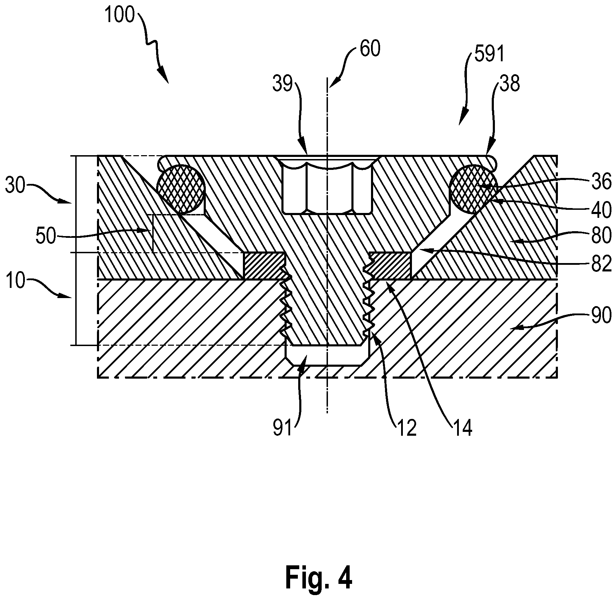

**Figure 3** **and** **Figure 4** show a fastening system 100 comprising a fastener 591 (the same as in figure 1 and 2), a first component 80 and a base component 90 in a three-dimensional view (figure 3) and in a cross-sectional view (figure 4).

In this embodiment the first component 80 is a checker plate and comprises a conical opening 82 to receive and contact the fastener 591. The base component 90 is a steel plate and comprises a blind hole 91. The fastener 591 is fasten to the first component 80 and to the base component 90 by screwing the fastener 591 into the base component 90. In this embodiment the base component 90 is fastened to the fastener 591 through the O-ring 36. The O-ring 36 comprises a contact surface 40. At the contact surface 40 the fastener 591 is in contact to the first component 80. Hence, tensile loads and/or shear leads can be transferred between the fastener 591 and the first component 80. The O-ring 36 is compressed due to the contact between the fastener 591 and the first component 80. This results in the fact, that the O-ring 36 has to absorb high tensile and/or shear loads without breaking. Further the top sealing element 36 seals the blind hole 91 and enhances the corrosion protection of the fastener 591.

In another embodiment the contact between the fastener 591 and the first component 80 can be realized additionally between the conical section 32 (see figure 2) of the fastener 591 and the conical opening 82 of the first component 80.

The bottom part 10 of the fastener 591 comprising a bottom thread 12 and a bottom sealing 14. The bottom thread 12 generates a thread in the base component 90 to connect the fastener 951 to the base component 90. Through the connection of the bottom thread 12 to the blind hole 91, the bottom sealing element 14 is compressed and seals the blind hole 91. This enhances the corrosion protection of the fastener 591.

Figure 4 shows further the converging height 50 of the converging section 32 of the fastener 591.

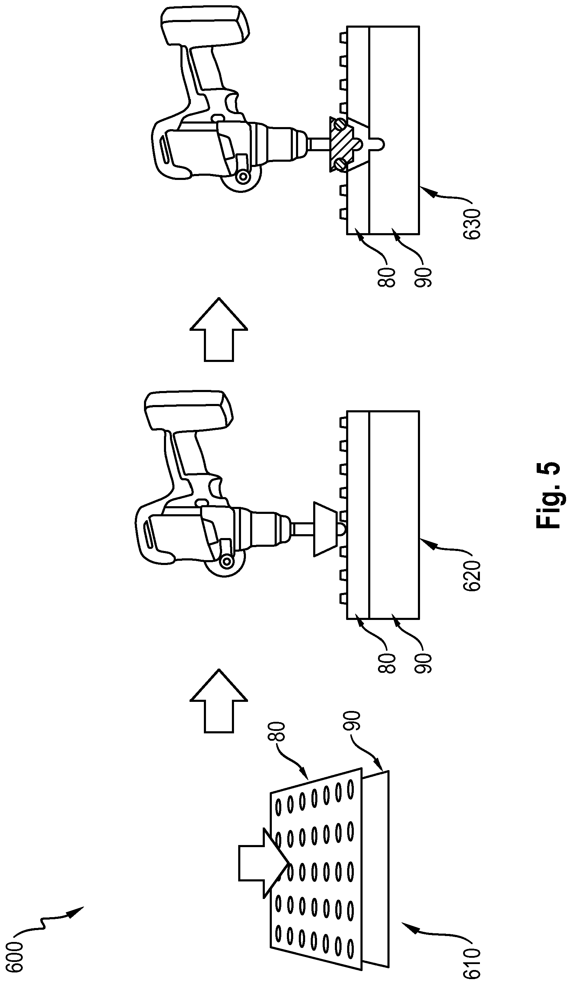

**Figure 5** shows a first embodiment of a method 600 for fastening a first component 80, here a checker plate, to a base component 90. The method 600 comprises at least three steps. The first step 610 comprising the step of placing the first component 80 on top of the base component 90. The next step 620 comprising the step of drilling with one step the first component 80 and the base component 90. The drilling step is done with a working device. The next step 630 comprising the step of fastening a fastener into to the first component 80 and the base component 90. The fastening step is done with the same working device as in step 620.

## Claims

1. A Fastener for fastening a first component to a base component, wherein the fastener comprising a bottom part, a head part and a fastening direction,
- wherein the bottom part comprising
- a bottom thread for interacting with the base component,
- a bottom sealing element for sealing an area between the fastener and the base component
- wherein the head part comprising
- a first section, wherein the first section is configured to receive and to transfer a tensile load and/or a shear load, wherein the tensile load acts along the fastening direction and the shear load acts perpendicular to the fastening direction,
- a top sealing element, wherein the top sealing element comprising at least one contact surface for contacting the top sealing element to the first component,
- a top section, wherein the top section comprising an interface for driving the fastener through the first component into the base component,
**characterized in that**
- the top sealing element is configured to receive and to transfer the tensile load and/or the shear load.

2. Fastener according to claim 1, wherein the first section is a first cylindrical section or a first converging section, wherein the first converging section converges in the fastening direction.

3. Fastener according to claim 2, wherein the first converging section is a first conical section.

4. Fastener according to claims 1 to 3, wherein the fastener further comprising a second section.

5. Fastener according to claim 4, wherein the second section is a second cylindrical section or a second converging section wherein the second converging section converges in the fastening direction.

6. Fastener according to claims 1 to 5, wherein the top sealing element comprising a top sealing position, wherein the top sealing position is at least one of the following:
- around the first section,
- around the second section,
- above the first section,
- above the second section,
- under the top section,
- on the top section.

7. Fastener according to claim 1 to 6, wherein the head part comprising a head base surface configured to apply a compression force to the bottom sealing element to ensure a sealing of the bottom sealing element in an axial and/or a radial direction.

8. Fastener according to claim 2 to 7, wherein the first converging section comprising an at least one first converging angle, wherein the at least one first converging angle is configured such, that the first converging section is able to receive and to transfer the tensile load and/or the shear load.

9. Fastener according to the preceding claim, wherein the at least one first converging angle comprising a value of 30° and/or 45° and/or 60°and/or at least one value out of one of the following angle ranges:
- 15° to 75°,
- 20° to 40°,
- 25° to 35°,
- 35° to 55°,
- 40° to 50°,
- 42° to 48°,
- 44° to 46°,
- 50° to 70°.

10. Fastener according to claims 1 to 9, wherein the contact surface of the top sealing element comprising a sealing width, wherein the sealing width comprising a value of 3 mm or a value out of one of the following ranges:
- - 1.0 mm to 5.0 mm,
- - 1.2 mm to 4.8 mm,
- - 1.4 mm to 4.6 mm,
- - 1.6 mm to 4.4 mm,
- - 1.8 mm to 4.2 mm,
- - 2.0 mm to 4.0 mm,
- - 2.2 mm to 3.8 mm,
- - 2.4 mm to 3.6 mm,
- - 2.6 mm to 3.4 mm,
- - 2.8 mm to 3.2 mm,
- - 2.5 mm to 3.5 mm,
- - 2.6 mm to 3.4 mm,
- - 2.7 mm to 3.3 mm,
- - 2.8 mm to 3.2 mm,
- - 2.9 mm to 3.1 mm.

11. Fastener according to claims 1 to 10, wherein the top sealing element comprising a compression rate, wherein the compression rate comprising a value of 30% or a value out of one of the following ranges:
- 5% to 60%,
- 5% to 50%,
- 5% to 45%,
- 5% to 40%,
- 5% to 35%,
- 5% to 30%,
- 5% to 25%,
- 5% to 20%,
- 5% to 15%,
- 5% to 15%,
- 10% to 30%.

12. A fastening system comprising a fastener according to the claims 1 to 11 and a first component and a base component, wherein the fastener fastens the first component to the base component.

13. Fastening System according to claim 12, wherein the first component comprising a first thickness, wherein the fastener comprising a converging section with a converging height along the fastening direction, wherein the converging height of the fastener is less or equal to the first thickness of the first component.

14. Method for fastening a first component to a base component, comprising at least the steps of:
- placing the first component on top of the base component,
- drilling with one step the first component and the base component,
- fastening a fastener into to the first component and the base component.

15. Method according to claim 14, wherein the method comprising at least a further step of:
- fixating the first component to the base component during the drilling of the first component and the base component.
